# EUROPEAN PATENT SPECIFICATION

(11) **EP 3 025 856 B1**
(45) Date of publication and mention of the grant of the patent: **04.11.2020**
(21) Application number: 14382477.9
(22) Date of filing: 27.11.2014
(51) Int. Cl.: B32B 5/02, B32B 7/12, B32B 27/12, B32B 27/28, B32B 27/30, B32B 27/32, B32B 27/34, B32B 27/36, B65D 65/40

(54) **A PACKAGE FORMED FROM A MULTILAYER STRUCTURE**
VERPACKUNG AUS EINER MEHRSCHICHTIGEN STRUKTUR
EMBALLAGE FORMÉ À PARTIR D'UNE STRUCTURE MULTICOUCHE

(43) Date of publication of application: 01.06.2016
(73) Proprietor: Dow Global Technologies LLC, Midland, MI 48674 (US)
(72) Inventor: Parkinson, Shaun, 43007 Tarragona (ES); Claasen, Gert, 8805 Richterswil (CH); Brunner, Kurt, 8038 Zürich (CH)
(74) Representative: Elzaburu S.L.P.

(56) References cited:
- WO-A1-02/102898
- WO-A1-2005/087486
- US-A1- 2010 150 479
- US-A1- 2012 074 027
- Dupont Packaging & Industrial Polymers: "Elvaloy 1224 AC resins Product Data Sheet", , 28 August 2014 (2014-08-28), pages 1-3, XP055360803, Retrieved from the Internet: URL:http://www.dupont.com/content/dam/asse ts/products-and-services/packaging-materia ls-solutions/assets/elvaloy_ac_1224.pdf [retrieved on 2017-03-31]

## Description

### Field of Invention

The disclosure relates to a package formed from a multilayer structure.

### Background of the Invention

Stand-up pouch flexible packaging formats are generally composed of two or more films that are laminated using either adhesive lamination or extrusion lamination. Typically the laminates will be a combination of one or two "hard" films made from polymers such as polyethylene terephthalate (PET), oriented polypropylene (OPP), oriented polyamide (OPA) (and their metalized variants), Aluminum foil and a sealant layer comprising polyethylene (PE) or polypropylene (PP). For such films to function and process on conventional pouch making equipment (such as vertical form fill seal (VFFS), horizontal form fill seal (HFFS) and Doypak) a temperature gradient across the film ideally of greater than 60 °C is needed, i.e., the sealant layer melts and seals but the outside film (hard film) does not. Currently, polymer packaging materials have a typical plastic feel. However, for some products, consumers may be more amenable to soft or cloth like feel and touch. US-A-2010/150479 discloses a package formed from a multilayer structure which comprises a nonwoven layer, a coextruded multilayer film having a polyolefin-based sealant layer with a melting point of equal to or above 104°C, wherein the nonwoven layer forms an outer layer of the package.

WO 2005/087486 A1 also discloses a package formed from a multilayer structure comprising a nonwoven outer layer and a coextruded multilayer film having a polyolefin-based sealant layer.

### Summary of the Invention

The disclosure is for a package formed from a multilayer structure.

In one embodiment, the disclosure provides a package comprising a multilayer structure which comprises a nonwoven layer; a coextruded multilayer film having a polyolefin-based sealant layer with a melting point of equal to or less than 90°C, wherein the nonwoven layer forms an outer layer of the package which provides a soft touch or feel and an outer surface with fabric-like appearance.

### Brief Description of the Drawings

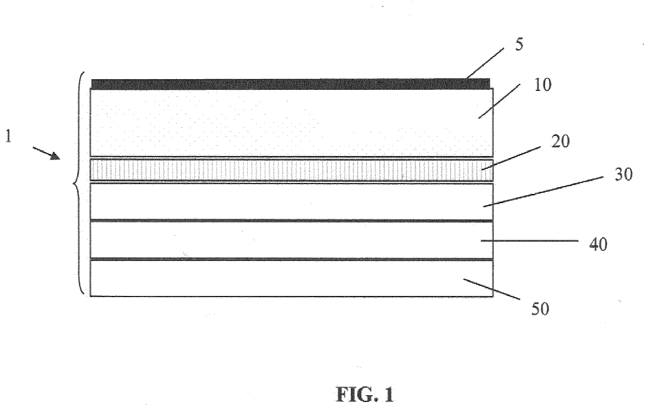

FIG. 1 is a schematic illustrating a cross section of a first embodiment of a multilayer structure useful in making a package according to the present disclosure.

### Detailed Description of the Invention

The disclosure provides a package.

As used herein, the term ethylene-based polymer means polymers comprising greater than 50% by weight of units which have been derived from ethylene monomer. This includes polyethylene homopolymers or copolymers (meaning units derived from two or more comonomers).

As used herein, the term propylene-based polymer means polymers comprising greater than 50% by weight of units which have been derived from propylene monomer. This includes polypropylene homopolymers or copolymers (meaning units derived from two or more comonomers).

As used herein, the term polyolefin-based means polymers comprising greater than 50% by weight of units which have been derived from one or more olefin monomers. This includes homopolymers (having units derived from a single olefin monomer) or copolymers (having units derived from two or more olefin comonomers).

In a first aspect, the invention provides a package comprising a multilayer structure which comprises a nonwoven layer; a coextruded multilayer film having a polyolefin-based sealant layer with a melting point of equal to or less than 90°C, wherein the nonwoven layer forms an outer layer of the package.

The package may have any format suitable for holding liquids and/or solids, including but not limited to, flexible packaging, pouches, bags, and stand-up pouches. In a particular aspect, the package is amenable to processing on conventional packaging equipment, including for example, VFFS, HFFS, and Doypack equipment.

Embodiments of the multilayer structure include any structure having more than one layer. For example, the multilayer structure may comprise a total of two, three, four, five, six, seven or more layers.

As used herein, the term nonwoven layer means a layer of material made from fibers bonded together by chemical, mechanical, heat or solvent treatment. Any nonwoven format made by any appropriate method may be used, such as those described in EP 1 745 171, and US Patent Application Publication No. 20140248811, the disclosures of which are incorporated herein by reference. The nonwoven material may be spunbond, melt blown, carded staple, spunlaced, air laid or air through formed. In another embodiment, the nonwoven layer may be a web having a combination of such nonwoven forms. For example, but not limited to, the nonwoven layer may be a spun bond/melt blown/spun bond web (SMS), a spun bond/melt blown/melt blown/spun bond web (SMMS), or spun bond/X/melt blown/melt blown/X/spun bond web (SXMMXS), where X can be any nonwoven form, including spun bond and melt blown.

Suitable polymers for the production of nonwoven materials (biaxially oriented polypropylene monocomponent spunbond nonwoven) include Braskem H502-25RG Polypropylene Resin (a homopolymer resin suitable for the use in spunbonded nonwovens production equipment and other fiber spinning processes); Braskem H502-25RG (a polypropylene resin which is a controlled rheology polypropylene offering excellent processability at melt temperatures between 220 and 280°C); and Braskem H502-25RG (a polypropylene resin which is modified to resist gas fading), all of which are commercially available from Braskem (Philadelphia, PA, USA). Other polymers include the polypropylene homopolymer grade HH450FB which is intended for fiber applications (commercially available from Borealis AG (Vienna, Austria)).

In one embodiment, the nonwoven layer is a spun bond nonwoven having a density which ranges from 15 gsm (grams per square meter) to 100 gsm. All individual values and subranges from 15 to 100 gsm are included and disclosed herein; for example the density of the spun bond nonwoven material can range from a lower limit of 15, 30, 45, 60, 75 or 90 gsm to an upper limit of 20, 35, 50, 65, 80, 95 or 100 gsm. For example, the density of the spun bond nonwoven material may be from 15 to 100 gsm, or in the alternative, from 15 to 60 gsm, or in the alternative, from 50 to 100 gsm, or in the alternative, from 25 to 75 gsm. In another embodiment, the fibers of the spun bond nonwoven material has a denier per filament between 1.5 and 3.5 dpf. All individual values and subranges from 1.5 to 3.5 dpf are included and disclosed herein; for example, the denier per filament can range from a lower limit of 1.5, 2.0, 2.5, or 3.0 dpf to an upper limit of 2.0, 2.5, 3.0 or 3.5 dpf. For example, the denier per filament can range from 1.5 to 3.5 dpf, or in the alternative, from 1.5 to 2.5 dpf, or in the alternative, from 2.5 to 3.0 dpf, or in the alternative, from 2 to 3 dpf.

The fibers used to make the nonwoven may be monocomponent or bicomponent fibers. Monocomponent fibers are typically formed from propylene-based polymer, ethylene-based polymer, or polyethyleneterephthalate. Bicomponent fibers are typically formed from combinations of propylene-based polymer, ethylene-based polymer, and polyethyleneterephthalate. For example, the bicomponent fibers may be polyethyleneterephthalate/polyethylene or polyethyleneterephthalate/polypropylene.

In a particular embodiment, the nonwoven layer is a spunbound polypropylene-based nonwoven of from 15 to 100 gsm. All individual values and subranges from 15 to 100 gsm are included and disclosed herein; for example, when the basis weight of the spunbound polypropylene-based nonwoven can range from a lower limit of 15, 30, 45, 60, 75 or 90 gsm to an upper limit of 20, 35, 50, 65, 80, 95 or 100 gsm. For example, the basis weight can range from 15 to 100 gsm, or in the alternative, from 15 to 57 gsm, or in the alternative, from 55 to 100 gsm, or in the alternative, from 25 to 90 gsm, or in the alternative, from 45 to 70 gsm.

In a particular embodiment, the nonwoven layer wherein the nonwoven layer exhibits a 45 degree gloss of equal to or less than 30%. All inidvidual values and subranges from less than or equal to 30% are included and disclosed herein. For example, the gloss of the nonwoven layer can be equal to or less than 30%, or in the alternative, equal to or less than 20%, or in the alternative, equal to or less than 15%, or in the alternative, equal to or less than 10%.

In another embodiment, the nonwoven layer is coated with a varnish. The varnish may be a heat resistant varnish, such as those commercially available from Siegwerk Druckfarben AG & Co. (Siegburg, Germany). In a particular embodiment, the melting point of the nonwoven material is less than or equal to 140 °C and the nonwoven layer is coated with a varnish. The melting point of the nonwoven material, as used herein, means the bulk melting point for a monocomponent fiber based nonwoven material or the melting point of the exterior of a bicomponent fiber based nonwoven material. In yet another embodiment, the nonwoven layer comprises bicomponent fibers wherein a difference in a melting point of an internal fiber component and a melting point of an external fiber component is at least 40 °C. All individual values and subranges from at least 40 °C are included and disclosed herein; for example, the difference in the melting points can range from at least 40 °C, or in the alternative, the difference in the melting points can range from at least 50 °C, or in the alternative, the difference in the melting points can range from at least 60 °C. In an alternative embodiment, the difference in melting points is no greater than 100 °C.

Embodiments of the package further comprise a coextruded multilayer film which comprises a polyolefin-based sealant layer formed from a polyolefin with a melting point of equal to or less than 90°C. The multilayer film may have any number of layers greater than or equal to two layers. For example, the multilayer film may have two, three, four, five, six or more layers. The multilayer film includes at least one layer which is formed from a polyolefin-based sealant.

Fig. 1 illustrates one embodiment of the multilayer structure 1 comprising a nonwoven layer 10, a lamination adhesive 20 and a multilayer film of three layers 30, 40 and 50 collectively, wherein the innermost layer 50 is a sealant layer formed from a polyolefin with a melting point of equal to or less than 90°C. Layers 30 and 40 may be formed from polyolefins, polyamides, ethylene vinyl alcohol (EVOH), polyvinyl alcohol (PVOH), PET, ionomers, functional tie layers compositions or combinations thereof. In a particular embodiment, layers 30, 40 and/or 50 have the same composition. Layers 30 and 40 may provide performance characteristics, such as toughness, barrier, permeability, tear strength, stiffness or color. In a particular embodiment, the multilayer film includes at least one barrier layer. Any suitable barrier layer may be used, including for example, Aluminum foil or metallized polymer layers. Fig. 1 further shows an optional varnish layer 5. The varnish layer 5, when present, may cover the entirety or only a portion of the nonwoven layer 10.

The lamination adhesive may be any suitable laimination adhesive, including solvent free and solvent based adhesives. Exemplary lamination adhesive include those commercially available from The Dow Chemical Company (Midland, MI, USA) under the names MOR-FREE ELM and MORE-FREE L. In one embodiment, the lamination adhesive has a curing temperature equal to or less than 80 °C. While shown with a lamination adhesive in Fig. 1, the multilayer film may alternatively be co-extruded directly onto the nonwoven layer.

The sealant layer is formed from a polyolefin having a melting point of equal to or less than 90°C. All individual values and subranges from equal to or less than 90°C are included and disclosed herein. For example, the melting point of the polyolefin can be less than or equal to 90°C, or in the alternative, less than or equal to 87.5 °C, or in the alternative, less than or equal to 85 °C. In a particular embodiment, the melting point of the polyolefin is at least 82.5 °C.

Polyolefins from which the sealant layer may be made include ethylene-based polymers, propylene-based polymers, including homopolymers and copolymers thereof. Exemplary polyolefins include but are not limited to those commercially available from The Dow Chemical Company (Midland, MI, USA) under the name AFFINITY, DOWLEX, ELITE, VERSIFY, INFUSE, ATTANE or under the names EXCEED, ENABLE, or EXACT or VISTAMAXX, which are commercially available from ExxonMobil Chemical Company (Houston, TX, USA), or uner the name QUEO, which is commercially available from Borealis AG (Vienna, Austria). In a particular embodiment, the sealant layer is formed from a polyolefin having a density of from 0.895 g/cc to 0.915 g/cc and a melt flow rate (ASTM D1238, 190 C, 2.16 kg) of from 1.0 to 5.0 g/10min.

The package may be formed from the multilayer structure using any appropriate equipment, including for example, VFFS, HFFS and Doypack equipment.

### Examples

The following examples are not according to the present invention.

### Production of Multilayer Structure

20 gsm nonwoven materials (Biaxially oriented polypropylene monocomponent spunbond nonwoven- Braskem H502-25RG Polypropylene Resin is a homopolymer resin suitable for the use in spunbonded nonwovens production equipment) is solvent free adhesive laminated to 70 µm polyethylene (PE) structure using MORFREE L716-FB and CR87-550 on a NORDMECCANICA ACCOPPIATRICE laminator (model 400) to produce Multilayer Structure Example 1. In the same manner, Comparative Multilayer Structure Example 1 with an oriented polypropylene (OPP) in lieu of the monocomponent spunbound nonwoven. The 70 µm polyethylene structure has the following three layer structure: 80 wt% ELITE 5960G + 20 wt% GRANIC 421 / 94 wt% ELITE 5960G + 6 wt% POLYWHITE 8160 / 85 wt% AFFINITY 1146G + 15 wt% LD352E (70µm total thickness with layer ratio 1/3/1). ELITE 5960 is a polyethylene resin having a density of 0.962 g/cc (ASTM D792) and a melt index I₂ of 0.85 g/10 min, which is commercially available from The Dow Chemical Company (Midland, MI, USA). GRANIC 421 is a Calcium Carbonate masterbatch commercially available from Granic Group (Tarragona Spain). POLYWHITE 8160 is a white masterbatch which is commercially available from A.Schulman Inc. (Akron, Ohio, USA). LDPE352E is a Low Density Polyethylene which is commercially available from The Dow Chemical Company (Midland, MI, USA). AFFINITIY 1146G is a polyolefin plastomer having a density of 0.897 g/cc and an I₂ of 1.6 g/10 min, which is commercially available from The Dow Chemical Company.

The resulting laminates were further slitted to the desired width for pouch manufacturing. MORFREE L716-FB and CR87-550 are commercially available from The Dow Chemical Company. The Multilayer Structure Examples were subjected to a variety of tests and the results are given in Table 1.

### Four Corner Sealed Pouch production

Pouch production was done on a Bosch SVE 2520WR Continuous VFFS Packaging line with the following conditions:
- Long seal=150°C
- Cross seal=160°C
- Corner seal=145/145/155°C
- Seal duration=500ms
- Speed=60bpm
- Bag length=240mm

**Table 1**

| | **Example 1** | **Comparative Example 1** |
|---|---|---|
| Multilayer Structure | Non woven (20gsm) /PE (70µ) Laminate | OPP (20µ) /PE (70µ) laminate |
| 45 Degree Gloss | 6.4% | 45.2% |
| Dynamic Coefficient of Friction (COF) Outside-Metal @ TGN TS&D | 0.275 | 0.2 |
| Coefficient of Friction Outside-Metal @ TGN TS&D | 0.274 | 0.21 |
| Average Elmendorf Tear - CD @ TGN TS&D | 899 g | 126 g |
| Average Elmendorf Tear - MD @ TGN TS&D | 348 g | 128 g |
| Handle-O-Meter (MD) Stiffness Nonwoven Fabrics Single | 369 g | 193g |

### Test Methods

Test methods include the following:
Polymer density is measured according to ASTM 792.

Melt index, I₂, is measured according to ASTM D1238 (190°C, 2.16 kg).

"Melting Point" as used here (also referred to a melting peak in reference to the shape of the plotted DSC curve) is typically measured by the DSC (Differential Scanning calorimetry) technique for measuring the melting points or peaks of polyolefins as described in U.S. Pat. No. 5,783,638.

45 Degree Gloss is measured according to ASTM D2457-13.

Dynamic and Static Coefficient of Friction are measured according to ISO 8295-1995.

Average Elmendorf Tears are measured according to ASTM D1922 - 09.

Handle-O-Meter is measured according to WSP 90.3.0(05). Handle-O-Meter equipment is available from Thwing-Albert Instrument Co. (Philadelphia, PA, USA). The WSP 90.3 (05) is a standard test method published by Worldwide Strategic Partners, "Standard Test for the Nonwovens and Related Industries," second edition.

The present invention may be embodied in other forms without departing from the spirit and the essential attributes thereof, and, accordingly, reference should be made to the appended claims, rather than to the foregoing specification, as indicating the scope of the invention.

## Claims

1. A package formed from a multilayer structure which comprises
a nonwoven layer;
a coextruded multilayer film having a polyolefin-based sealant layer with a melting point of equal to or less than 90 °C:
wherein the nonwoven layer forms an outer layer of the package.

2. The package accoding to claim 1, wherein the sealant layer forms at least a portion of the interior layer of the package.

3. The package according to any one of the preceding claims, wherein the package is capable of being formed, filled and sealed on continuous heat seal processing equipment.

4. The package according to any one of the preceding claims, wherein the polyolefin-based sealant layer has a melting point equal to or less than 87.5 °C or equal to or less than 85 °C.

5. The package according to any one of the preceding claims, wherein the coextruded multilayer film comprises a first layer, a second layer and a third layer wherein the third layer is the polyolefin-based sealant layer and the first and second layers are made from one or more materials selected from the group consisting of polyolefins, polyamides, ethylene vinyl alcohol, polyvinyl alcohols, polyethylene terephthalate, ionomers and functionalized polymers.

6. The package according to claim 5, wherein the coextruded multilayer film further comprises one or more barrier layers.

7. The package according to claim 5 or 6, wherein the coextruded multilayer film further comprises one or more tie layers.

8. The package according to any one of the preceding claims, wherein the coextruded multilayer film is adhered to the nonwoven layer using one or more lamination adhesives.

9. The package according to any one of the preceding claims, wherein the coextruded multilayer film is directly extruded onto the nonwoven layer.

10. The package according to any one of the preceding claims, wherein the sealant layer is the innermost layer.

11. The package according to any one of the preceding claims, wherein the nonwoven layer comprises a spunbound polypropylene-based nonwoven of from 15 to 100 gsm.

12. The package according to claim 11, wherein the nonwoven layer comprises a spunbound/meltblown/spunbound, spunbound/melblown/meltblown/spunbound, or spunbound/X/melblown/meltblown/X/spunbound structure wherein X is a nonwoven, spunbound or meltblown material.

13. The package according to any one of claims 1-10, wherein the nonwoven layer is one or more selected from the group consisting of carded staple non wovens, airlaid nonwovens, spunlaced nonwovens and airthrough nonwovens.

14. The package according to any one of claims 1-10, wherein the nonwoven layer comprises one or more of bicomponent PET/PE fibers and PP/PE fibers.

15. The package according to claim 14, wherein the difference in a melting point of an internal fiber component and a melting point of an external fiber component is at least 40 °C.

16. The package according to any one of claims 1-10, wherein the nonwoven layer comprises monocomponent fibers made from one or more of PP, PE and PET.

17. The package according to any one of the preceding claims, further comprising a varnish covering an outer surface of the nonwoven layer.

18. The package according to any one of the preceding claims wherein an outer surface of the nonwoven layer is capable of being printed.

## Patentansprüche

1. Eine Verpackung, die aus einer mehrschichtigen Struktur gebildet ist, die Folgendes beinhaltet:
eine Vliesschicht;
eine coextrudierte mehrschichtige Folie, die eine Versiegelungsschicht auf Polyolefinbasis mit einem Schmelzpunkt von gleich oder weniger als 90 °C aufweist; wobei die Vliesschicht eine äußere Schicht der Verpackung bildet.

2. Verpackung gemäß Anspruch 1, wobei die Versiegelungsschicht mindestens einen Teil der inneren Schicht der Verpackung bildet.

3. Verpackung gemäß einem der vorhergehenden Ansprüche, wobei die Verpackung auf einem kontinuierlichen Heißsiegelverarbeitungsgerät gebildet, gefüllt und versiegelt werden kann.

4. Verpackung gemäß einem der vorhergehenden Ansprüche, wobei die Versiegelungsschicht auf Polyolefinbasis einen Schmelzpunkt von gleich oder weniger als 87,5 °C oder gleich oder weniger als 85 °C aufweist.

5. Verpackung gemäß einem der vorhergehenden Ansprüche, wobei die coextrudierte mehrschichtige Folie eine erste Schicht, eine zweite Schicht und eine dritte Schicht beinhaltet, wobei die dritte Schicht die Versiegelungsschicht auf Polyolefinbasis ist und die erste und zweite Schicht aus einem oder mehreren Materialien hergestellt sind, die ausgewählt sind aus der Gruppe, bestehend aus Polyolefinen, Polyamiden, Ethylenvinylalkohol, Polyvinylalkoholen, Polyethylenterephthalat, lonomeren und funktionalisierten Polymeren.

6. Verpackung gemäß Anspruch 5, wobei die coextrudierte mehrschichtige Folie ferner eine oder mehrere Barriereschichten beinhaltet.

7. Verpackung gemäß Anspruch 5 oder 6, wobei die coextrudierte mehrschichtige Folie ferner eine oder mehrere Bindungsschichten beinhaltet.

8. Verpackung gemäß einem der vorhergehenden Ansprüche, wobei die coextrudierte mehrschichtige Folie unter Verwendung eines oder mehrerer Laminierklebstoffe auf die Vliesschicht geklebt ist.

9. Verpackung gemäß einem der vorhergehenden Ansprüche, wobei die coextrudierte mehrschichtige Folie direkt auf die Vliesschicht extrudiert ist.

10. Verpackung gemäß einem der vorhergehenden Ansprüche, wobei die Versiegelungsschicht die innerste Schicht ist.

11. Verpackung gemäß einem der vorhergehenden Ansprüche, wobei die Vliesschicht ein gesponnenes Vlies auf Polypropylenbasis von 15 bis 100 g/m² beinhaltet.

12. Verpackung gemäß Anspruch 11, wobei die Vliesschicht eine gesponnene/schmelzgeblasene/gesponnene, gesponnene/schmelzgeblasene/schmelzgeblasene/gesponnene oder gesponnene/X/schmelzgeblasene/schmelzgeblasene/X/gesponnene Struktur beinhaltet, wobei X ein Vliesstoff-, gesponnenes oder schmelzgeblasenes Material ist.

13. Verpackung gemäß einem der Ansprüche 1-10, wobei die Vliesschicht eine oder mehrere ist, die aus der Gruppe, bestehend aus kardierten Stapelvliesstoffen, Airlaid-Vliesstoffen, wasserstrahlverfestigten Vliesstoffen und Airthrough-Vliesstoffen ausgewählt sind.

14. Verpackung gemäß einem der Ansprüche 1-10, wobei die Vliesschicht eine oder mehrere von Zweikomponenten-PET/PE-Fasern und -PP/PE-Fasern beinhaltet.

15. Verpackung gemäß Anspruch 14, wobei der Unterschied zwischen einem Schmelzpunkt einer inneren Faserkomponente und einem Schmelzpunkt einer äußeren Faserkomponente mindestens 40 °C beträgt.

16. Verpackung gemäß einem der Ansprüche 1-10, wobei die Vliesschicht Einkomponentenfasern beinhaltet, die aus einem oder mehreren von PP, PE und PET hergestellt sind.

17. Verpackung gemäß einem der vorhergehenden Ansprüche, ferner beinhaltend einen Lack, der eine äußere Fläche der Vliesschicht bedeckt.

18. Verpackung gemäß einem der vorhergehenden Ansprüche, wobei eine äußere Fläche der Vliesschicht bedruckt werden kann.

## Revendications

1. Un emballage formé à partir d'une structure multicouche qui comprend une couche non tissée ;
un film multicouche coextrudé ayant une couche de produit d'étanchéité à base de polyoléfine avec un point de fusion égal ou inférieur à 90 °C ;
dans lequel la couche non tissée forme une couche extérieure de l'emballage.

2. L'emballage selon la revendication 1, dans lequel la couche de produit d'étanchéité forme au moins une partie de la couche intérieure de l'emballage.

3. L'emballage selon l'une quelconque des revendications précédentes, l'emballage pouvant être formé, rempli et scellé de façon étanche sur un équipement de traitement de thermoscellage en continu.

4. L'emballage selon l'une quelconque des revendications précédentes, dans lequel la couche de produit d'étanchéité à base de polyoléfine a un point de fusion égal ou inférieur à 87,5 °C ou égal ou inférieur à 85 °C.

5. L'emballage selon l'une quelconque des revendications précédentes, dans lequel le film multicouche coextrudé comprend une première couche, une deuxième couche et une troisième couche, la troisième couche étant la couche de produit d'étanchéité à base de polyoléfine et les première et deuxième couches étant fabriquées à partir d'un ou de plusieurs matériaux choisis dans le groupe consistant en polyoléfines, polyamides, éthylène alcool vinylique, alcools polyvinyliques, polyéthylène téréphtalate, ionomères et polymères fonctionnalisés.

6. L'emballage selon la revendication 5, dans lequel le film multicouche coextrudé comprend en outre une ou plusieurs couches barrières.

7. L'emballage selon la revendication 5 ou la revendication 6, dans lequel le film multicouche coextrudé comprend en outre une ou plusieurs couches de liaison.

8. L'emballage selon l'une quelconque des revendications précédentes, dans lequel le film multicouche coextrudé est amené à adhérer à la couche non tissée à l'aide d'un ou de plusieurs adhésifs de stratification.

9. L'emballage selon l'une quelconque des revendications précédentes, dans lequel le film multicouche coextrudé est directement extrudé sur la couche non tissée.

10. L'emballage selon l'une quelconque des revendications précédentes, dans lequel la couche de produit d'étanchéité est la couche la plus interne.

11. L'emballage selon l'une quelconque des revendications précédentes, dans lequel la couche non tissée comprend un non-tissé à base de polypropylène filé-lié de 15 à 100 g/m².

12. L'emballage selon la revendication 11, dans lequel la couche non tissée comprend une structure filée-liée/obtenue par fusion-soufflage/filée-liée, filée-liée/fondue-soufflée/fondue-soufflée/filée-liée, ou filée-liée/X/fondue-soufflée/fondue-soufflée/X/filée-liée, X étant un matériau non tissé, filé-lié ou obtenu par fusion-soufflage.

13. L'emballage selon l'une quelconque des revendications 1 à 10, dans lequel la couche non tissée est un ou plusieurs éléments choisis dans le groupe consistant en non-tissés à fibres courtes cardées, non-tissés par voie pneumatique (airlaid), non-tissés hydroliés et non-tissés par traversée d'air (airthrough).

14. L'emballage selon l'une quelconque des revendications 1 à 10, dans lequel la couche non tissée comprend un ou plusieurs éléments parmi des fibres PET/PE et des fibres PP/PE à deux composants.

15. L'emballage selon la revendication 14, dans lequel la différence entre un point de fusion d'un composant de fibre interne et un point de fusion d'un composant de fibre externe est d'au moins 40 °C.

16. L'emballage selon l'une quelconque des revendications 1 à 10, dans lequel la couche non tissée comprend des fibres à un composant fabriquées à partir d'un ou de plusieurs éléments parmi PP, PE et PET.

17. L'emballage selon l'une quelconque des revendications précédentes, comprenant en outre un vernis recouvrant une surface extérieure de la couche non tissée.

18. L'emballage selon l'une quelconque des revendications précédentes dans lequel une surface extérieure de la couche non tissée est à même d'être imprimée.
